# EUROPEAN PATENT SPECIFICATION

(11) **EP 3 672 184 B1**
(45) Date of publication and mention of the grant of the patent: **20.01.2021**
(21) Application number: 18214306.5
(22) Date of filing: 20.12.2018
(51) Int. Cl.: H04L 29/06, H04L 12/721, H04L 12/715

(54) **SYSTEM AND DETECTING AND DEFENDING METHOD FOR EDGE NETWORK**
SYSTEM UND DETEKTIONS- UND ABWEHRVERFAHREN FÜR EDGE-NETZ
SYSTÈME ET PROCÉDÉ DE DÉTECTION ET DE DÉFENSE POUR RÉSEAU DE BORD

(43) Date of publication of application: 24.06.2020
(73) Proprietor: National Chung-Shan Institute of Science and Technology, 325 Taoyuan City (TW)
(72) Inventor: Chou, Li-Der, New Taipei City 234 (TW); Tseng, Chia-Wei, New Taipei City 243 (TW); Yen, Chia-Kuan, Tainan City 701 (TW); Tsai, Wei-Hsiang, Taipei City 116 (TW); Ou, Tsung-Fu, Taoyuan City 325 (TW); Chiu, Yi-Hsuan, Taoyuan City 320 (TW); Chen, Wei-Yu, Taipei City 104 (TW); Lai, Meng-Sheng, Hsinchu County 312 (TW)
(74) Representative: Straus, Alexander

(56) References cited:
- US-A1- 2018 109 557
- US-A1- 2018 152 475
- US-A1- 2018 234 454
- UJJAN RAJA MAJID ALI ET AL: "Suspicious Traffic Detection in SDN with Collaborative Techniques of Snort and Deep Neural Networks", 2018 IEEE 20TH INTERNATIONAL CONFERENCE ON HIGH PERFORMANCE COMPUTING AND COMMUNICATIONS; IEEE 16TH INTERNATIONAL CONFERENCE ON SMART CITY; IEEE 4TH INTERNATIONAL CONFERENCE ON DATA SCIENCE AND SYSTEMS (HPCC/SMARTCITY/DSS), IEEE, 28 June 2018 (2018-06-28), pages 915-920, XP033506942, DOI: 10.1109/HPCC/SMARTCITY/DSS.2018.00152 [retrieved on 2019-01-22]

## Description

### Field of the Invention

The present disclosure relates to a system and detecting and defending method for edge network, and more particularly, to a system and detecting and defending method for edge network capable of detecting and defending malicious attacks.

### Background of the Invention

With the development of network technology and the growing of 5th generation (5G) wireless system technology, threats to network information security are increased. Due to the multi-application of 5G wireless system, all kinds of new service, new architecture, and new technique come with challenges of security and protection of users' privacy. According to the statistics of IDC (International Data Corporation), over 50 billion terminals and devices of internet will exist in 2020, and over 50% data are analyzed, processed and stored at the edge network, which increases demands of calculation of the edge network. In response to the threats to the information security of the multi-application internet in the future, updation and innovation measurements of the information security protection should be accelerated. In addition, detection and defense are the core issues what the current internet security may encounter. Therefore, how to design a protection mechanism for the edge network security more thoroughly, and detect and recognize the malicious attack signaling to provide differential security service is a goal for the future internet and the development of information security.

In the field of information security, except mechanisms of antivirus software, firewall, encryption system, backup and certification, Intrusion Detection System (IDS) is an important defense line for the entrepreneurs to implement the network security. From the perspective of intrusion detection technology, the information security may be classified into misuse detection and anomaly detection. The former utilizes a signature based manner to determine the intrusion according to a predefined signature rules with high accuracy. However, as amounts of weak spots and vulnerability of software are increasingly exposed, the predefined signature rules inflate rapidly, which indirectly affects the detection efficiency and is unable to detect unknown attacks. The latter collects legal actions of user and normal activities of system to supervise whether the user or the system is normal, which may detect unknown type of intrusion, but is keen to misjudge legal actions as abnormal actions. Therefore, the disadvantages stated above of the prior art should be improved.

U.S. application No. US 2018/109557 A1 provides a software defined network capable of detecting DDoS attacks by using the feature information concerning the flow and a back propagation neural network (BPNN). U.S. application No. US 2018/0152475 A1 provides a DDoS attack detection system based on SVM-SOM combination and method to classify an attack flow through an SVM corresponding to the classified traffic type among multiple SVMs, and to determine whether a flow which is not classified as an attack flow by the SVM is a suspicious pattern through a SOM or not. "Suspicious traffic detection in SDN with collaborative techniques of snort and deep neural networks" provides a SDN with openflow based protocol tend to transform traditional network architecture to improve the signature-based IDS limitation with higher detection rate with low false-positive triggers.

### Summary of the Invention

The present disclosure provides a system and detecting and defending method for the edge network to analyze the packets and recognize possible attacks, so as to reduce the affects by the malicious attacks and improve the information security of the edge network.

This is achieved by a computer system according to the independent claim 1 or by a detecting and defending method for an edge network according to the independent claim 6 here below. The dependent claims pertain to corresponding further developments and improvements.

As will be seen more clearly from the detailed description following below, the claimed computer system comprises an openflow switch, configured to receive a plurality of packets; a network controller, coupled to the openflow switch and configured to determine a route of each of the plurality of packets; and a detecting and defending system, configured to perform transformation of information formats of the plurality of packets, retrieve and label the plurality of packets to determine whether the plurality of packets are abnormal or not and generate a defending determination.

In another aspect, the claimed detecting and defending method for an edge network comprises receiving a plurality of packets; performing transformation of information formats of the plurality of packets, retrieving and labeling the plurality of packets, to determine whether the plurality of packets are abnormal or not and generate a defending determination.

### Brief Description of the Drawings

FIG. 1 is a schematic diagram of a network system according to an embodiment of the present disclosure.

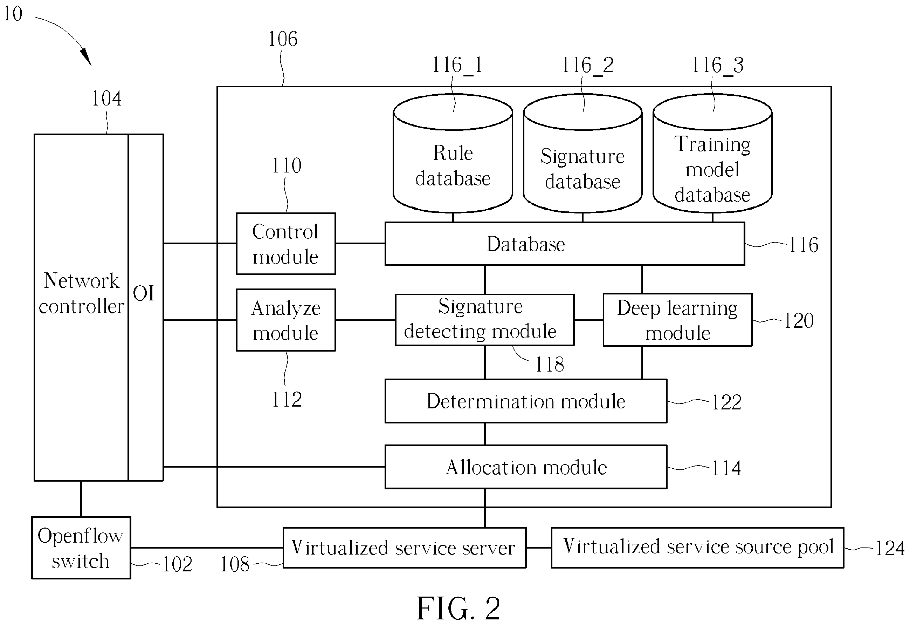

FIG. 2 is a schematic diagram of a detecting and defending system according to an embodiment of the present disclosure.
FIGs. 3 and 4 are schematic diagrams of a process to an embodiment of the present disclosure.

### Detailed Description

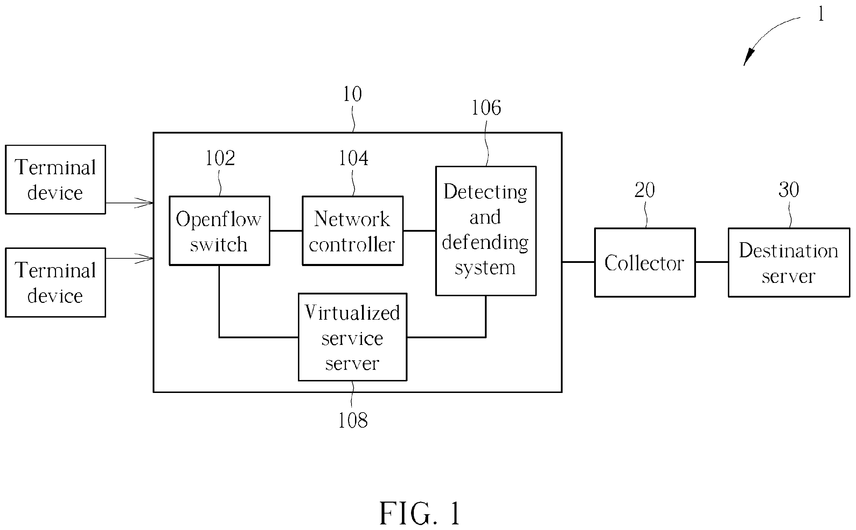

Please refer to FIG. 1, which is a schematic diagram of a network system 1 according to an embodiment of the present disclosure. The network system 1 includes at least a terminal device, a computer system 10, a collector 20 and a destination server 30. The terminal device may be any kind of mobile terminal device, such as a computer, mobile pad or mobile phone, which generates signaling or a plurality of packets. The terminal device may be a legal terminal device or a malicious/suspicious terminal device which accesses to an edge network, e.g. Ethernet or wireless access network (WLAN), via the computer system 10. A collector 20 thereby collects the signaling or packets and transfers the collected signaling or packets toward the destination server 30 via a communication network.

The computer system 10 includes an openflow switch 102, a network controller 104, a detecting and defending system 106 and a virtualized service server 108. The openflow switch 102 is configured to receive signaling or packets generated by the terminal device. The network controller 104 is coupled to the openflow switch 102 and is configured to determine a route of each signaling or each of the packets, and the detecting and defending system 106 is configured to perform transformation of information formats of the plurality of packets, retrieve and label the packets to determine whether the packets are abnormal or not and thereby generate a defending determination. In an embodiment, the openflow switch 102 may direct the received signaling or packets to the detecting and defending system 106, the virtualized service server 108 or collector 20 according to the defending determination. For example, the openflow switch 102 may amend or transfer the received packets to a designate port, or transfer the received packets the network controller 104, which is called Packet-in; alternatively, the openflow switch 102 may receive the packets from the network controller 104 and transfer the packers to the designate port, which is called Packet-out.

Therefore, the computer system 10 of the present disclosure analyzes the packets and recognizes possible attacks to reduce the affects by the malicious attacks and improve the information security of the edge network.

In detail, the detecting and defending system 106 further includes a control module 110, an analyze module 112, an allocation module 114, a database 116, a signature detecting module 118, a deep learning module 120 and a determination module 122. In an embodiment, an operation and management interface OI is connected with the control module 110, the analyze module 112 and the allocation module 114, so as to integrate the detecting and defending system 106 and the network controller 104. The control module 110 is configured to update a plurality of openflow rules to the database 116. The analyze module 112 is configured to transform information formats of the packets and label a plurality of signaling signatures corresponding to the information formats of the packets. The allocation module 114 is configured to perform an allocation of packets, i.e. perform the security protection, according to the defending determination made by the determination module 122. The database 116 is configured to link with a rule database 116_1, a signature database 116_2 and a training model database 116_3, wherein the rule database 116_1 is configured to store rule information of the signaling or packets, the signature database 116_2 is configured to store the signaling signatures corresponding to the signaling or packets, and the training model database 116_3 is configured to store a deep neutral network (DNN) training model.

The signature detecting module 118 is coupled to the database 116 and the analyze module 112 and is configured to compare the signaling signatures corresponding to the information formats of the packets with the signature database 116_2 to determine a first result. The deep learning module 120 is coupled to the database and the analyze module 112 and is configured to take the signaling signatures corresponding to the information formats of the packets as input information for classification of a deep neural network (DNN) to determine a second result. The determination module 122 is coupled to the signature detecting module 118 and the deep learning module 120 and is configured to generate the defending determination according to the first result and the second result.

In an embodiment, the deep learning module 120 performs a linear or non-linear transformation with multiple-processing layers for the input information, and extracts or retrieves features of the input information to represent the input information. In addition, the DNN is utilized for generating a deep learning model for transforming the input information into a prediction result. Therefore, the deep learning module 120 classifies the input information (i.e. the signaling signatures corresponding to the information formats of the packets), reduces the irrelevant features from the input information accordingly and extracts the features of the packets to generate the second result.

In order to generate the determination result, please refer to Table 1. Table 1 is the defending determinations corresponding to different combinations of the first result and the second result. In Table 1, "0" represents that the result determined by the signature detecting module 118 or the deep learning module 120 is normal, and "1" represents that the result determined by the signature detecting module 118 or the deep learning module 120 is abnormal. As can be seen from Table 1, when both of the first result and the second result are normal, i.e. (0,0), the packets are normal and transferred according to the openflow rules; when the first result is abnormal, i.e. the first result and the second result is (1,0) or (1, 1), the determination module 122 determines that the packet belongs to an attack and adopts a virtualized firewall to block a source IP of the attack; when the first result is normal and the second result is abnormal, i.e. the first result and the second result is (0,1), the determination module 122 determines that the packet belongs to an attack and limits a bandwidth of the attack and control the source IP. Notably, the first result and the second result may be determined at the same time or individually, and not limited thereto.

**Table 1**

| First Result | Second Result | Defending Determination |
|---|---|---|
| 0 | 0 | Normal |
| 1 | 0 | Virtualized the firewall |
| 0 | 1 | Bandwidth limitation |
| 1 | 1 | Virtualized the firewall |

After the defending result is determined, the virtualized service server 108 allocates the virtualized service accordingly. In an embodiment, a virtualized service source pool 124 is coupled to the virtualized service server 108, which may be utilized for storing the virtualized services, e.g. firewall or intrusion detection system (IDS).

The examples mentioned above briefly explain the computer system 10 of the present disclosure. Notably, those skilled in the art may make proper modifications. For example, the allocation corresponding to the defending determination may be modified according to different system requirements, but not limited thereto, which belongs to the scope of the present disclosure.

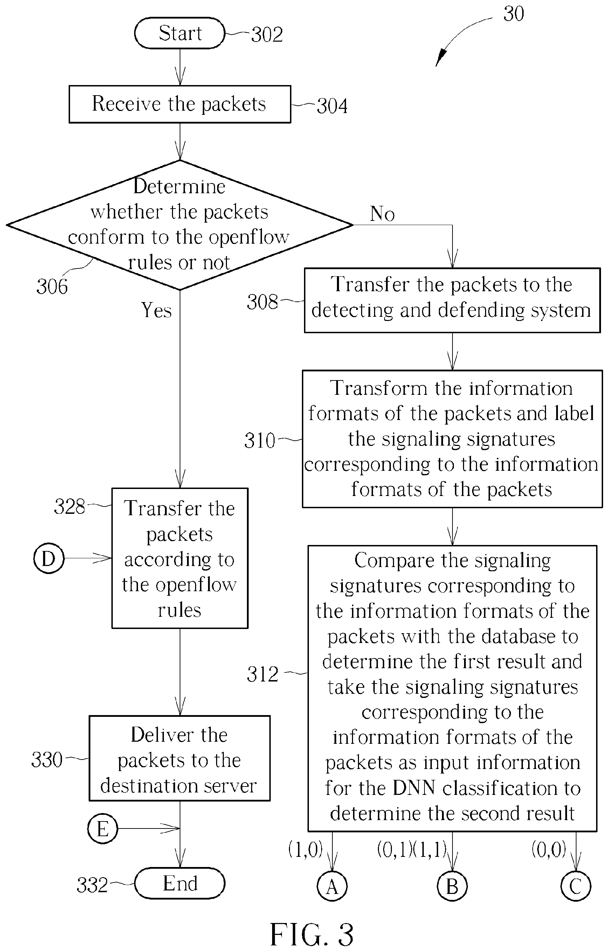

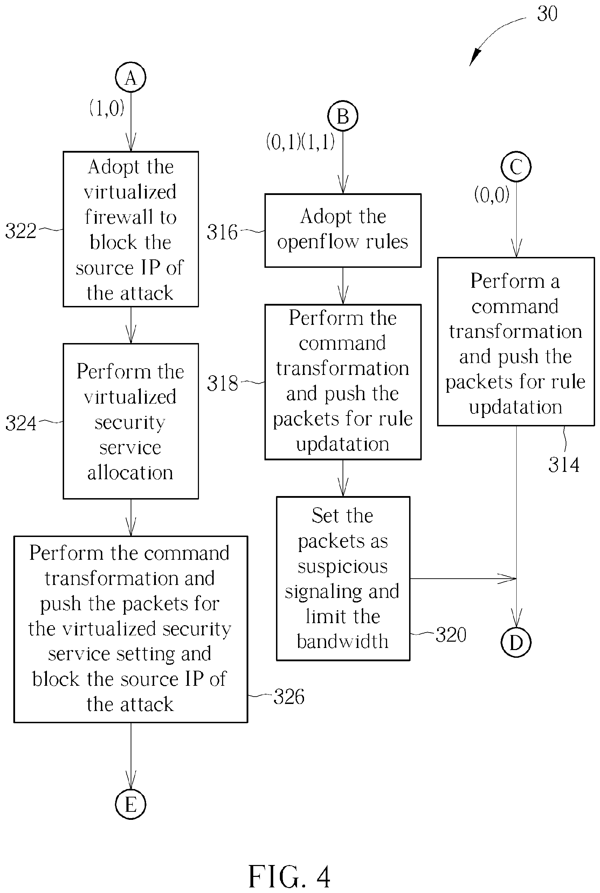

According to different applications and design concepts, the computer system 10 of the present disclosure may be implemented in all kinds of methods. An operation method of the computer system 10 may conclude to a process 30, which is shown in FIGS. 3 and 4. The process 30 includes the following steps:
Step 302: Start.
Step 304: Receive the packets.
Step 306: Determine whether the packets conform to the openflow rules or not; when yes, execute step 328, and when no, execute step 308.
Step 308: Transfer the packets to the detecting and defending system 106.
Step 310: Transform the information formats of the packets and label the signaling signatures corresponding to the information formats of the packets.
Step 312: Compare the signaling signatures corresponding to the information formats of the packets with the database to determine the first result and take the signaling signatures corresponding to the information formats of the packets as input information for the DNN classification to determine the second result.
Step 314: When the first result and the second result are (0,0), perform a command transformation and push the packets for rule updatation.
Step 316: When the first result and the second result are (0,1) or (1, 1), adopt the openflow rules.
Step 318: Perform the command transformation and push the packets for rule updatation.
Step 320: Set the packets as suspicious signaling and limit the bandwidth.
Step 322: When the first result and the second result are (1,0), adopt the virtualized firewall to block the source IP of the attack.
Step 324: Perform the virtualized security service allocation.
Step 326: Perform the command transformation and push the packets for the virtualized security service setting and block the source IP of the attack.
Step 328: Transfer the packets according to the openflow rules.
Step 330: Deliver the packets to the destination server.
Step 332: End.

Notably, steps 314, 318 and 324 are executed by the allocation module 114 of the computer system 10, and steps 316 and 322 are executed by the determination module 122 of the computer system 10. The operation of the process 30 can be known by referring to the embodiments of the computer system 10 described above, and are not repeated herein for brevity.

The process 30 of the present disclosure may precisely distinguish denial-of-service (DoS) attacks form the normal packets according to the signatures of the packets, and thereby improves a recognition rate of the attacks.

In summary, the present disclosure provides a computer system and a detecting and defending method for the edge network, and more particularly, to analyze the packets and recognize possible attacks, so as to reduce the affects by the malicious attacks and improve the information security of the edge network.

## Claims

1. A computer system (10), **characterized by** comprising:
an openflow switch (102), configured to receive a plurality of packets;
a network controller (104), coupled to the openflow switch (102) and configured to determine a route of each of the plurality of packets; and
a detecting and defending system (106), configured to perform transformation of information formats of the plurality of packets, retrieve and label the plurality of packets to determine whether the plurality of packets are abnormal or not and generate a defending determination;
wherein the detecting and defending system (106) comprises:
a control module (110), coupled to the network controller (104) via an interface (OI) and configured to update a plurality of openflow rules to a database (116);
an analyze module (112), coupled to the network controller (104) via the interface (OI) and configured to transform the information formats of the plurality of packets and label a plurality of signaling signatures corresponding to the information formats of the plurality of packets;
an allocation module (114), coupled to the network controller (104) via the interface (OI) and configured to perform an allocation of the plurality of packets according to the defending determination;
a signature detecting module (118), coupled to the database (116) and the analyze module (112), and configured to compare the plurality of signaling signatures corresponding to the information formats of the plurality of packets with the database (116) to determine a first result;
a deep learning module (120), coupled to the database (116) and the analyze module (112), and configured to take the plurality of signaling signatures corresponding to the information formats of the plurality of packets as input information for classification of a deep neural network, abbreviated to DNN, to determine a second result; and
a determination module (122), coupled to the signature detecting module (118) and the deep learning module (120), and configured to generate the defending determination according to the first result and the second result.

2. The computer system (10) of claim 1, **characterized in that** the database comprises a rule database (116_1), a signature database (116_2) and a training model database (116_1), and the interface (OI) is configured to integrate the control module (110), the analyze module (112) and the allocation module (114).

3. The computer system (10) of claim 1, **characterized in that** when the first result is abnormal, the allocation module (114) adopts a virtualized firewall to block a source IP of an attack; and when the first result is normal and the second result is abnormal, the allocation module (114) limits a bandwidth of the attack to control the source IP of the attack.

4. A detecting and defending method (30) for an edge network, **characterized by** comprising:
receiving by an openflow switch (102) a plurality of packets (304);
performing by a detecting and defending system (106) transformation of information formats of the plurality of packets, retrieving and labeling the plurality of packets (310), to determine whether the plurality of packets are abnormal or not and generate a defending determination;
transferring the plurality of packets to a corresponding plurality of destinations, when the plurality of packets conform to a plurality of openflow rules;
transforming by an analyze module (112) the information formats of the plurality of packets and labeling by the analyze module (112) a plurality of signaling signatures corresponding to the information formats of the plurality of packets;
comparing by a signature detecting module (118) the plurality of signaling signatures corresponding to the information formats of the plurality of packets with a database (116) to determine a first result;
taking by a deep learning module (120) the plurality of signaling signatures corresponding to the information formats of the plurality of packets as input information for classification of a deep neural network to determine a second result (312); and
generating by a determination module (122) the defending determination according to the first result and the second result; wherein the signature detecting module (118), the deep learning module (120) and the determination module (122) are comprised within the detecting and defending system (106); and wherein the plurality of openflow rules are stored in the database (116).

5. The detecting and defending method (30) of claim 4, **characterized in that** the step of performing transformation of the information formats of the plurality of packets, retrieving and labeling the plurality of packets (310) comprises:
transforming the information formats of the plurality of packets; and
labeling the plurality of signaling signatures corresponding to the information formats of the plurality of packets.

6. The detecting and defending method (30) of claim 4, **characterized by** further comprising when the first result is abnormal, adopting a virtualized firewall to block a source IP of an attack; and when the first result is normal and the second result is abnormal, limiting a bandwidth of the attack to control the source IP of the attack.

## Patentansprüche

1. Computersystem (10), **dadurch gekennzeichnet, dass** es umfasst:
einen *Openflow*-Schalter (102), der ausgestaltet ist, mehrere Datenpakete zu empfangen;
eine Netzwerksteuerung (104), die mit dem *Openflow*-Schalter (102) gekoppelt und ausgestaltet ist, eine Route jedes der mehreren Datenpakete zu bestimmen; und
ein Erfassungs- und Verteidigungssystem (106), das ausgestaltet ist, eine Umwandlung von Informationsformaten der mehreren Datenpakete durchzuführen, und die mehreren Datenpakete abzurufen und zu markieren, um zu bestimmen, ob die mehreren Datenpakete abnormal sind oder nicht und eine Verteidigungsentscheidung zu erzeugen;
worin das Erfassungs- und Verteidigungssystem (106) umfasst:
ein Steuermodul (110), das über ein Interface (OI) mit der Netzwerksteuerung (104) gekoppelt und ausgestaltet ist, mehrere *Openflow*-Regeln einer Datenbank (116) zu aktualisieren;
ein Analysemodul (112), das über das Interface (OI) mit der Netzwerksteuerung (104) gekoppelt und ausgestaltet ist, die Informationsformate der mehreren Datenpakete umzuwandeln und mehrere Signalsignaturen entsprechend den Informationsformaten der mehreren Datenpakete zu markieren;
ein Zuteilungsmodul (114), das über das Interface (OI) mit der Netzwerksteuerung (104) gekoppelt und ausgestaltet ist, eine Zuteilung der mehreren Datenpakete entsprechend der Verteidigungsentscheidung durchzuführen;
ein Signaturerfassungsmodul (118), das mit der Datenbank (116) und dem Analysemodul (112) gekoppelt und ausgestaltet ist, die mehreren Signalsignaturen entsprechend den Informationsformaten der mehreren Datenpakete mit der Datenbank (116) zu vergleichen, um ein erstes Ergebnis zu bestimmen;
ein Tieflernmodul (120), das mit der Datenbank (116) und dem Analysemodul (112) gekoppelt und ausgestaltet ist, die mehreren Signalsignaturen entsprechend den Informationsformaten der mehreren Datenpakete als Eingabeinformation zum Klassifizieren eines tiefen Neuralnetzwerks, abgekürzt als DNN, zu verwenden, um ein zweites Ergebnis zu bestimmen; und
ein Bestimmungsmodul (122), das mit dem Signaturerfassungsmodul (118) und dem Tieflernmodul (120) gekoppelt und ausgestaltet ist, die Verteidigungsentscheidung entsprechend dem ersten Ergebnis und dem zweiten Ergebnis zu erzeugen.

2. Computersystem (10) nach Anspruch 1, **dadurch gekennzeichnet, dass** die Datenbank eine Regel-Datenbank (116_1), eine Signaturen-Datenbank (116_2) und ein Übungsmodell-Datenbank (116_1) umfasst, und worin das Interface (OI) ausgestaltet ist, das Steuermodul (110), das Analysemodul (112) und das Zuteilungsmodul (114) zu integrieren.

3. Computersystem (10) nach Anspruch 1, **dadurch gekennzeichnet, dass** wenn das erste Ergebnis abnormal ist, das Zuteilungsmodul (114) eine virtuelle Firewall anwendet, um eine Quellen-IP eines Angriffs zu blockieren; und wenn das erste Ergebnis normal ist und das zweite Ergebnis abnormal ist, das Zuteilungsmodul (114) eine Bandbreite des Angriffs beschränkt, um die Quellen-IP des Angriffs zu überwachen.

4. Erfassungs- und Verteidigungsverfahren (30) für ein Randnetzwerk, **dadurch gekennzeichnet, dass** es umfasst:
Empfangen mehrere Datenpakete (304) durch einen *Openflow*-Schalter (102);
Durchführen einer Umwandlung von Informationsformaten der mehreren Datenpakete, Abrufen und Markieren der mehreren Datenpakete (310) durch ein Erfassungs- und Verteidigungssystem (106), um zu bestimmen, ob die mehreren Datenpakete abnormal sind oder nicht und Erzeugen einer Verteidigungsentscheidung;
Übertragen der mehreren Datenpakete an mehrere entsprechende Ziele, wenn die mehreren Datenpakete mehreren *Openflow*-Regeln genügen;
Umwandeln der Informationsformate der mehreren Datenpakete durch ein Analysemodul (112) und Markieren mehrerer Signalsignaturen entsprechend den Informationsformaten der mehreren Datenpakete durch das Analysemodul (112);
Vergleichen der mehreren Signalsignaturen entsprechend den Informationsformaten der mehreren Datenpakete mit einer Datenbank (116) durch ein Signaturerfassungsmodul (118), um ein erstes Ergebnis zu bestimmen;
Verwenden der mehreren Signalsignaturen entsprechend den Informationsformaten der mehreren Datenpakete als Eingabeinformation zum Klassifizieren eines tiefen Neuralnetzwerks durch ein Tieflernmodul (120), um ein zweites Ergebnis (312) zu bestimmen; und
Erzeugen der Verteidigungsentscheidung entsprechend dem ersten Ergebnis und dem zweiten Ergebnis durch ein Bestimmungsmodul (122);
worin das Signaturerfassungsmodul (118), das Tieflernmodul (120) und das Bestimmungsmodul (122) in dem Erfassungs- und Verteidigungssystem (106) umfasst sind; und
worin die mehreren *Openflow*-Regeln in der Datenbank (116) gespeichert sind.

5. Erfassungs- und Verteidigungsverfahren (30) nach Anspruch 4, **dadurch gekennzeichnet, dass** der Schritt des Durchführens der Umwandlung des Informationsformates der mehreren Datenpakete, des Abrufen und Markierens der mehreren Datenpakete (310) umfasst:
Umwandeln des Informationsformates der mehreren Datenpakete; und
Markieren der mehreren Signalsignaturen entsprechend den Informationsformaten der mehreren Datenpakete.

6. Erfassungs- und Verteidigungsverfahren (30) nach Anspruch 4, **dadurch gekennzeichnet, dass** wenn das erste Ergebnis abnormal ist, eine virtuelle Firewall angewendet wird, um eine Quellen-IP eines Angriffs zu blockieren; und wenn das erste Ergebnis normal ist und das zweite Ergebnis abnormal ist, eine Bandbreite des Angriffs beschränkt wird, um die Quellen-IP des Angriffs zu überwachen.

## Revendications

1. Système informatique (10), **caractérisé en ce qu'**il comprend :
un commutateur à flux ouvert (102) configuré pour recevoir une pluralité de paquets ;
un contrôleur de réseau (104), couplé au commutateur à flux ouvert (102) et configuré pour déterminer un itinéraire de chacun de la pluralité de paquets ; et
un système de détection et de défense (106), configuré pour effectuer une transformation de formats d'information de la pluralité de paquets, pour récupérer et étiqueter la pluralité de paquets pour déterminer si la pluralité de paquets est anormale ou non et pour générer une détermination de défense ;
le système de détection et de défense (106) comprenant :
un module de commande (110), couplé au contrôleur de réseau (104) par l'intermédiaire d'une interface (OI) et configuré pour mettre à jour une pluralité de règles de flux ouvert à une base de données (116) ;
un module d'analyse (112), couplé au contrôleur de réseau (104) par l'intermédiaire de l'interface (OI) et configuré pour transformer les formats d'information de la pluralité de paquets et pour étiqueter une pluralité de signatures de signalisation correspondant aux formats d'information de la pluralité de paquets ;
un module d'allocation (114), couplé au contrôleur de réseau (104) par l'intermédiaire de l'interface (OI) et configuré pour effectuer une allocation de la pluralité de paquets selon la détermination de défense ;
un module de détection de signature (118), couplé à la base de données (116) et au module d'analyse (112) et configuré pour comparer la pluralité de signatures de signalisation correspondant aux formats d'information de la pluralité de paquets à la base de données (116) pour déterminer un premier résultat ;
un module d'apprentissage profond (120), couplé à la base de données (116) et au module d'analyse (112) et configuré pour prendre la pluralité de signatures de signalisation correspondant aux formats d'information de la pluralité de paquets en tant qu'information d'entrée pour la classification d'un réseau neuronal profond, abrégé en DNN, pour déterminer un deuxième résultat ; et
un module de détermination (122), couplé au module de détection de signature (118) et au module d'apprentissage profond (120) et configuré pour générer la détermination de défense selon le premier résultat et le deuxième résultat.

2. Système informatique (10) selon la revendication 1, **caractérisé en ce que** la base de données comprend une base de données de règles (116_1), une base de données de signatures (116_2) et une base de données de modèles d'apprentissage (116_1) et l'interface (OI) est configurée pour intégrer le module de commande (110), le module d'analyse (112) et le module d'allocation (114).

3. Système informatique (10) selon la revendication 1, **caractérisé en ce que**, lorsque le premier résultat est anormal, le module d'allocation (114) adopte un pare-feu virtualisé pour bloquer une adresse IP source d'une attaque ; et lorsque le premier résultat est normal et que le deuxième résultat est anormal, le module d'allocation (114) limite une bande passante de l'attaque pour commander l'adresse IP source de l'attaque.

4. Procédé de détection et de défense (30) pour un réseau périphérique, **caractérisé en ce qu'**il comprend :
la réception, par un commutateur à flux ouvert (102), d'une pluralité de paquets (304) ;
la réalisation, par un système de détection et de défense (106), de la transformation de formats d'information de la pluralité de paquets, de la récupération et de l'étiquetage de la pluralité de paquets (310), pour déterminer si la pluralité de paquets est anormale ou non et pour générer une détermination de défense ;
le transfert de la pluralité de paquets vers une pluralité correspondante de destinations, lorsque la pluralité de paquets est conforme à une pluralité de règles de flux ouvert ;
la transformation, par un module d'analyse (112), des formats d'information de la pluralité de paquets et l'étiquetage, par le module d'analyse (112), d'une pluralité de signatures de signalisation correspondant aux formats d'information de la pluralité de paquets ;
la comparaison, par un module de détection de signature (118), de la pluralité de signatures de signalisation correspondant aux formats d'information de la pluralité de paquets à une base de données (116) pour déterminer un premier résultat ;
la prise, par un module d'apprentissage profond (120), de la pluralité de signatures de signalisation correspondant aux formats d'information de la pluralité de paquets en tant qu'information d'entrée pour la classification d'un réseau neuronal profond pour déterminer un deuxième résultat (312) ; et
la génération, par un module de détermination (122), de la détermination de défense selon le premier résultat et le deuxième résultat ;
le module de détection de signature (118), le module d'apprentissage profond (120) et le module de détermination (122) étant compris dans le système de détection et de défense (106) ; et
la pluralité de règles de flux ouvert étant stockée dans la base de données (116).

5. Procédé de détection et de défense (30) selon la revendication 4, **caractérisé en ce que** l'étape de réalisation d'une transformation des formats d'information de la pluralité de paquets, de récupération et d'étiquetage de la pluralité de paquets (310) comprend :
la transformation des formats d'information de la pluralité de paquets ; et
l'étiquetage de la pluralité de signatures de signalisation correspondant aux formats d'information de la pluralité de paquets.

6. Procédé de détection et de défense (30) selon la revendication 4, **caractérisé en ce qu'**il comprend en outre, lorsque le premier résultat est anormal, l'adoption d'un pare-feu virtualisé pour bloquer une adresse IP source d'une attaque ; et lorsque le premier résultat est normal et que le deuxième résultat est anormal, la limitation d'une bande passante de l'attaque pour commander l'adresse IP source de l'attaque.
